# EUROPÄISCHE PATENTSCHRIFT

(11) **EP 1 616 361 B1**
(45) Veröffentlichungstag und Bekanntmachung des Hinweises auf die Patenterteilung: **14.05.2008**
(21) Anmeldenummer: 04716220.1
(22) Anmeldetag: 02.03.2004
(51) Int. Cl.: H01M 8/04

(54) **ENERGIEUMWANDLUNGSVORRICHTUNG SOWIE REFORMEREINRICHTUNG UND BRENNSTOFFZELLENEINRICHTUNG HIERFÜR**
ENERGY CONVERTING DEVICE, AND REFORMER UNIT AND FUEL CELL UNIT THEREFOR
DISPOSITIF DE CONVERSION DE L'ENERGIE AVEC INSTALLATION DE REFORMAGE ET INSTALLATION DE PILE A COMBUSTIBLE ASSOCIEES

(30) Priorität: 24.04.2003 DE 10318495
(43) Veröffentlichungstag der Anmeldung: 18.01.2006
(73) Patentinhaber: Bayerische Motoren Werke Aktiengesellschaft, 80809 München (DE)
(72) Erfinder: LAMP, Peter, 86916 Kaufring (DE); KAMMERER, Jürgen, 85276 Pfaffenhofen (DE); EDLINGER, Bernhard, 86152 Augsburg (DE)
(86) Internationale Anmeldenummer: PCT/EP2004/002073
(87) Internationale Veröffentlichungsnummer: WO 2004/095618

(56) Entgegenhaltungen:
- EP-A- 0 199 878
- EP-A- 0 356 906
- EP-A- 1 047 144
- EP-A- 1 231 659
- EP-A- 1 234 697
- DE-A- 10 139 617
- US-A- 4 670 359
- US-B1- 6 416 891

## Beschreibung

Die Erfindung betrifft eine Energieumwandlungsvorrichtung nach dem Oberbegriff des Anspruchs 1. Zum Stand der Technik wird neben der DE 101 39 617 A auf die EP 1 234 697 A1 verwiesen.

Aus dem Stand der Technik sind Hilfsenergieversorgungseinrichtungen (Auxiliary Power Units; APU) bekannt, die unabhängig von dem eigentlichen Antriebsaggregat eines Fahrzeugs dessen elektrisches Bordnetz mit Strom versorgen können. Bekannte Möglichkeiten sind zum einen der Antrieb eines Generators über ein motorunabhängiges Aggregat, basierend auf interner oder externer Verbrennung und zum anderen der Einsatz einer Brennstoffzelle. Dabei sind unterschiedliche Typen von Brennstoffzellen, z.B. Membran-Brennstoffzellen, Schmelzkarbonat-Brennstoffzellen und Festelektrolyt-Brennstoffzellen bekannt, die für eine Hilfsenergieversorgungseinrichtung eingesetzt werden können. Außerdem sind auch Reformer und Gasreinigungseinrichtungen bekannt, die es erlauben, aus Benzin, Diesel, Methanol, Erdgas oder anderen höheren Kohlenwasserstoffen ein Synthesegas zu erzeugen, das in den Brennstoffzellen elektrochemisch in elektrische Energie umgewandelt werden kann.

Membran-Brennstoffzellen (PEMFC, DMFC) werden bei ca. 80-100°C betrieben und können nur reinen Wasserstoff umsetzen, sodass neben dem eigentlichen Reformer eine aufwändige Gasreinigung notwendig ist. Festelektrolytbrennstoffzellen (SOFC) arbeiten bei 700-1000°C und sind aufgrund der höheren Betriebstemperatur und ihrer Funktionsweise in der Lage, unterschiedliche Synthesegase mit geringeren Reinheitsanforderungen umzusetzen. Dies erlaubt ein relativ einfaches Energieumwandlungssystem, z.B. bestehend aus einer Reformierung mittels partieller Oxidation (POx-Reformer) und einer Festelektrolyt-Brennstoffzelle.

Nicht in der Brennstoffzelle zur Stromproduktion benutztes Reformat wird in einer Abgasnachreinigung verbrannt. Abwärme, die im System bei der partiellen Oxidation im Reformer, der chemischen Reaktion im Brennstoffzellenstapel und bei der Nachverbrennung entsteht, wird, sofern sie nicht systemintern zur Vorwärmung von Edukten genutzt wird, durch das Abgas aus dem System entlassen.

Derartige Systeme sind bekannt, vgl. bspw. die eingangs genannte DE 101 39 617 A1, jedoch kann bei diesen der erreichbare Wirkungsgrad noch gesteigert werden, da ein relativ hoher Anteil der dem System zugeführten chemischen Energie in Form von Wärmeenergie mit dem Abgas abgegeben wird. Aus der eingangs weiterhin genannten EP 1 234 697 A1 ist ein Verfahren zum Heizen der Fahrgastzelle eines Kraftfahrzeugs bekannt, wobei das Kraftfahrzeug mittels elektrischer Energie angetrieben wird, die von einer Brennstoffzelle erzeugt wird, welche außerdem Wärmeenergie erzeugt, die über ein Wärme übertragendes Fluid entweder über einen Kühler in die Umgebung abgeleitet oder über einen Lufterhitzter zur Erwärmung der Fahrgastzelle verwendet wird. Auch hier sind der Brennstoffzelle ein Reformer sowie ein Brenner zugeordnet, die warme Gase erzeugen, deren Wärmeenergie an das Wärme übertragende Fluid übertragen werden kann.

Hier nun weitere Verbesserungen aufzuzeigen, ist Aufgabe der vorliegenden Erfindung.
Die Lösung dieser Aufgabe ist für ein Kraftfahrzeug mit einer Energieumwandlungsvorrichtung nach dem Oberbegriff des Anspruchs 1 dadurch gekennzeichnet, dass die Synthesegasproduktion und die Wärmeproduktion der Reformereinrichtung innerhalb der Grenzwerte "vollständige Verbrennung = maximale Wärmeproduktion " und "vollständige Reformierung = maximale Synthesegasproduktion" frei wählbar ist. Vorteilhafte Weiterbildungen sind Inhalt der Unteransprüche.

Eine erfindungsgemäße Reformereinrichtung kann sowohl als Reformer für eine nachgeschaltete Brennstoffzelleneinrichtung als auch als Standheizer/Zuheizer betrieben werden, wobei der Brennraum der Reformereinrichtung durch Einbau eines Katalysatorträgers, d. h. eine keramische oder metallische Matrix, mit aufgebrachtem Katalysator sowie die Luft-, Brennstoff- und Kühlwasserzufuhr und deren Regelung derart modifiziert ist, dass die Umsetzung des Kraftstoffes und damit die Synthesegas- und Wärmeproduktion der Reformereinrichtung innerhalb der Grenzwerte "vollständige Verbrennung = maximale Wärmeproduktion" und "vollständige Reformierung = maximale Synthesegasproduktion" frei wählbar ist. Dies bedeutet, dass die erfindungsgemäße Reformereinrichtung wahlweise als Standheizer/Zuheizer oder als partieller Oxidationsreformer (POx-Reformer) oder als eine Mischung aus beiden funktioniert.

In eine erfindungsgemäße Reformereinrichtung kann neben Benzin bzw. Diesel und Luft ein weiteres Medium, z. B. ein Anodenabgas aus einer Festelektrolyt-Brennstoffzelle oder Wasserdampf, eingespeist werden.

An einer erfindungsgemäßen Reformereinrichtung kann im Gegensatz zu einem POx-Reformer nach dem Stand der Technik das Synthesegas (= Reformat) durch die spezielle Konstruktion des Wärmetauschers, der integraler Bestandteil der Reformereinrichtung ist, die Reformereinrichtung mit einer typischen Reformat- oder Abgastemperatur von etwa 300°C-400°C, insbesondere 350°C oder darunter verlassen. Die Wärmemenge, die das Synthesegas zwischen der Betriebstemperatur der Reformierung (Temperatur des Synthesegases ca. 800°C **-** 1050°C) und der Auslasstemperatur aus der erfindungsgemäßen Reformereinrichtung (Synthesegasauslasstemperatur ca. 350°C) abgibt, wird dem Kühlwasser aufgegeben und ist somit nutzbar, wodurch der Gesamtwirkungsgrad hoch ist.

Die beschriebene Abkühlung des Reformats erlaubt es, kostengünstig und mit relativ geringem konstruktivem Aufwand, eine im Fahrzeug räumlich getrennte Unterbringung der Reformereinrichtung und einer zugehörigen Brennstoffzelleneinrichtung oder des Antriebsmotors (insbesondere in der Funktion als Motorvorwärmeinrichtung für den Kaltstart) zu erreichen und somit eine Flexibilität im Packaging zu realisieren, welche für einen flexiblen, d. h. an unterschiedliche Bauraumgegebenheiten anpassbaren Verbau in einem Fahrzeug erwünscht ist. Weiterhin ist vorteilhaft, dass für die Reformereinrichtung nur der Montageraum eines Standheizers oder eines Zuheizers benötigt wird und die Anbindung ans Kühlwassernetz ohne Änderung gegenüber einem Standheizer/Zuheizer gemäß dem Stand der Technik bestehenbleiben kann.

Die Brennstoffzelleneinrichtung ist als Stromerzeugungsmodul ausgebildet und besteht aus einem Festelektrolytbrennstoffzellen-Stapel, einem Anodengaswärmetauscher und insbesondere einem Kathodenluftwärmetauscher, wobei kaltes, insbesondere von der Reformereinrichtung zur Verfügung gestelltes Reformat durch die Wärme des Anodenabgases im Anodengaswärmetauscher auf eine Temperatur aufgewärmt wird, die einen Eintritt in den heißen Festelektrolytbrennstoffzellen-Stapel erlaubt. Gleichzeitig wird das Anodenabgas auf eine Temperatur abgekühlt, die eine weitere Verteilung im Fahrzeug in einfacher Weise ohne Verwendung aufwendig isolierter Leitungen aus hochtemperaturbeständigen Materialien erlaubt. Dieser Vorgang kann mittels des Anodengaswärmetauscher oder eines zusätzlichen, dem Anodengaswärmetauscher nachgeschalteten Zusatzwärmetauscher, erfolgen, wobei das Vorsehen des Zusatzwärmetauschers eine bevorzugte Ausführungsform darstellt.

Die Brennstoffzelleneinrichtung kann durch einen Kathodenluftwärmetauscher, der die Kathodenzuluft von Umgebungstemperatur auf eine Temperatur aufwärmt, die einen Eintritt in den heißen Festelektrolytbrennstoffzellen-Stapel erlaubt, weitergebildet sein und dabei die Wärme der Kathodenabluft und/oder des in der Nachverbrennung erzeugten Abgases ausnutzen.

Nach einer weiteren vorteilhaften Ausführungsform des Kathodenluftwärmetauschers kann auf der Kathodengasauslassseite einer Brennstoffzelle vor dem Kathodengaswärmetauscher die Einspeisung von Anodenabgas und damit die vollständige Umsetzung noch brennbarer Bestandteile im Anodenabgas mit der Kathodenluft ermöglicht werden. Eine mögliche Ausführungsform hierfür ist, dass die Wärmetauscherflächen der Kathodenabluftseite mit einem entsprechenden Oxidationskatalysator belegt sind. Eine besonders vorteilhafte Ausführungsform der Erfindung ist, dass die Bestandteile Anodengaswärmetauscher, Festelektrolytbrennstoffzellen-Stapel und Kathodenluftwärmetauscher teilweise oder jeweils ganz zu einer Einheit zusammengefasst und modulartig ausgebildet sind. Die Bereitstellung der elektrischen Energie erfolgt durch die elektrochemische Umwandlung des Reformatgases im Festelektrolybrennstoffzellen-Stapel in im Wesentlichen bekannter Art und Weise.

Eine Reformereinrichtung und eine Brennstoffzelleneinrichtung können zu einer Energieumwandlungsvorrichtung derart zusammengeschaltet sein, dass einer der Brennstoffzelleneinrichtung kathodenseitig nachgeordneten Nachbrennkammer sowohl Frischreformatgas, als auch Anodenabgas sowie ggfs. Nachbrennfrischluft und Kathodenabgas zuführbar sind. Hierfür ist vorgesehen, dass in der frischreformatgasführenden Leitung ein erstes Dreiwegeventil angeordnet ist und in einer Anodenabgasleitung nach dem Anodengaswärmetauscher und ggf. nach dem Zusatzwärmetauscher ein zweites Dreiwegeventil angeordnet ist, mit dem ein Teilstrom des Restreformatgases abzweigbar und der Nachbrennkammer zuführbar ist, während der andere Teilstrom dem Reformer zugeführt wird, wodurch der elektrische Wirkungsgrad des Systems steigt. Vorteilhaft bei dieser Anordnung ist, dass z. B. beim Startvorgang der Energieumwandlungsvorrichtung Abgas bzw. Reformatgas geringerer Qualität nach Art eines Bypasses um den Festelektrolytbrennstoffzellen-Stapel herumführbar ist und dieser somit vor eventuellen Beschädigungen geschützt ist. Ebenso kann in vorteilhafter Art und Weise Reformatgas zwischen dem Brennstoffzellenstapel und dem Kathodenluftwärmetauscher aufgeteilt werden. Insbesondere bei Teillast gewährleistet dies zusätzliche Flexibilität im Wärmemanagement der Kathodenzuluft und des Brennstoffzellenstapels. Die Dreiwegeventile in der Frischreformatgasleitung und der Anodenabgasleitung sind bei Vorrichtungen gemäß dem Stand der Technik zwangsweise als so genannte Heißgasventile auszubilden, da die Gastemperaturen üblicher Reformereinrichtungen bzw. Brennstoffzelleneinrichtungen in diesen Bereichen etwa 700°C bis 900°C betragen. Bei einer erfindungsgemäßen Energieumwandlungsvorrichtung mit eine erfindungsgemäßen Reformereinrichtung und einer erfindungsgemäßen Brennstoffzelleneinrichtung sind die Temperaturen im Bereich der Dreiwegeventile wesentlich geringer und betragen in etwa 300°C oder darunter, sodass hier Standardbauteile eingesetzt werden können, was die Kosten und den konstruktiven Aufwand erheblich reduziert. Weiterhin kann dem Dreiwegeventil in der Anodenabgas-, d. h. der Restreformat-Leitung, nachgeordnet eine Gasfördereinrichtung zur Überwindung des Druckverlustes zwischen der Anodenabgssseite der Brennstoffzelleneinrichtung und der Reformereinrichtung angeordnet sein. Durch die dadurch erzielte Zirkulierung des Anodenabgases lässt sich die Ausnutzung der im Brennstoff enthaltenen chemischen Energie zur Stromerzeugung und damit der elektrische Wirkungsgrad und der Gesamtwirkungsgrad deutlich steigern. Die Gasfördereinrichtung zusammen mit dem zugehörigen Dreiwegeventil können bei der erfindungsgemäßen Anordnung ebenfalls als Standardbauteile ausgeführt werden, da die vorliegenden Gastemperaturen ca. 300°C oder weniger betragen.

Im Folgenden wird die Erfindung anhand der Zeichnung beispielhaft näher erläutert. Es zeigen:
- Fig. 1: eine erste Ausführungsform der erfindungsgemäßen Energieumwandlungsvorrichtung mit einer erfindungsgemäßen Reformereinrichtung und einer erfindungsgemäßen Brennstoffzelleneinrichtung;
- Fig. 2: eine zweite Ausführungsform der erfindungsgemäßen Energieumwandlungsvorrichtung gemäß Fig. 1.

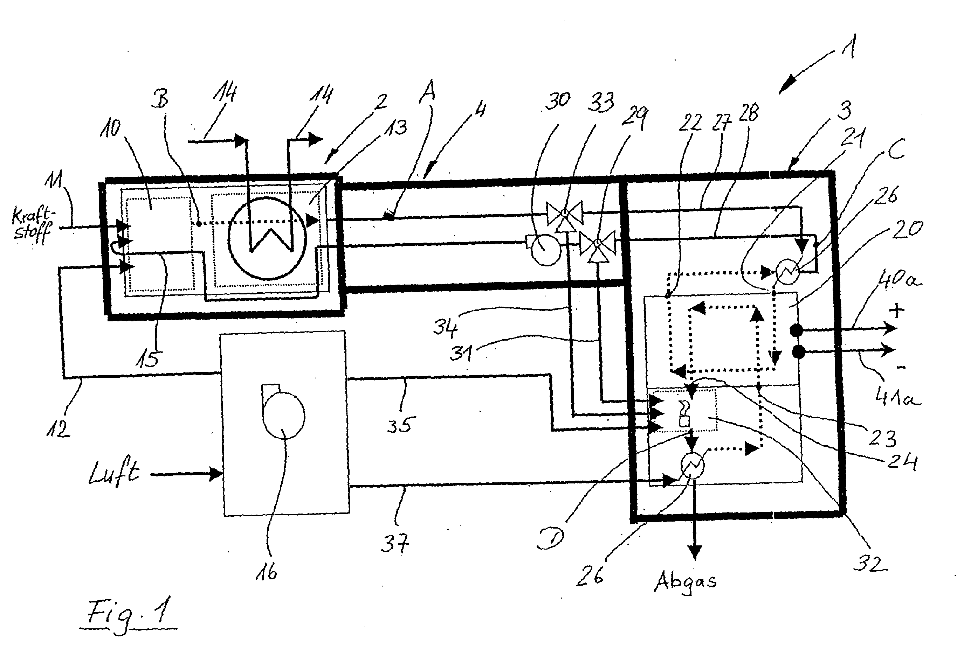

Eine erfindungsgemäße Energieumwandlungsvorrichtung 1 (Fig. 1) besitzt eine erfindungsgemäße Reformereinrichtung 2, eine erfindungsgemäße Brennstoffzelleneinrichtung 3 und eine Verteilungseinrichtung 4.

Die erfindungsgemäße Reformereinrichtung 2 weist einen im Wesentlichen bekannten Reformer 10, dem über eine Brennstoffzufuhrleitung 11 Brennstoff und über eine Frischluftzufuhrleitung 12 Umgebungsluft zuführbar ist, auf. Der Reformer 10 arbeitet nach dem katalytischen Prinzip, d. h., dass entlang einer Reformermatrix, auf der sich ein Katalysator befindet, der Kraftstoff in ein Reformatgas umgewandelt wird.

Eine weitere mögliche Arbeitsweise des Reformers 10 ist die Umwandlung des Kraftstoffs und der Umgebungsluft zu dem Reformatgas im Wege einer so genannten offenen Verbrennung, welche im Reformerbetrieb üblicherweise als fette Verbrennung, d. h. mit Kraftstoffüberschuss, abläuft.

Weiterhin weist die Reformereinrichtung 2 Mittel zum Einstellen des Kraftstoff-Luftverhältnisses im Reformer 10 auf. Beispielsweise sind diese Mittel als Drosselventil in der Frischluftzufuhrleitung (nicht gezeigt) ausgebildet. Diese Mittel zum Einstellen des Kraftstoff-Luftverhältnisses im Reformer 10 sind dabei derart ausgelegt, dass das Kraftstoff-Luftverhältnis von einem so genannten fetten Gemisch, d. h. einem Gemisch mit Kraftstoffüberschuss, mit einem Lambda-Wert von ungefähr λ=0,3 bis 0,35 bis zu einem stöchiometrischen Verhältnis zwischen Sauerstoff und Kraftstoff, d. h. einem Lambdawert von λ=1 einstellbar ist. Bei einer Verbrennung des Kraftstoffs mit einem Lambda-Wert von λ< 1 liegt eine so genannte fette Verbrennung vor, sodass das Abgas als Reformatgas vorliegt und Wasserstoff enthält. Bei einem Lambda-Wert von λ=1 (stöchiometrisches Kraftstoff-Luftverhältnis) liegt eine so genannte vollständige Verbrennung vor, sodass im Abgas, welches den Reformer 10 verlässt, lediglich CO₂ und Wasser enthalten ist, also im wesentlichen kein Reformatgas vorliegt. Somit arbeitet der Reformer 10 im Bereich kleiner Lambda-Werte (A= 0,3 bis 0,35) als reiner Reformer und im Bereich des stöchiometrischen Kraftstoff-Luftverhältnisses (λ= 1) als reiner Heizer, wobei durch die Zugabe von Frischluft jeder beliebige Zwischenbetriebspunkt zwischen den beiden Extrembetriebspunkten Reformer und Heizer eingestellt werden kann.

Gas, welches den Reformer 10 verlässt, d.h. Reformatgas oder Abgas oder eine Mischung aus beiden, wird einem dem Reformer 10 nachgeschalteten Reformatgaswärmetauscher 13 zugeleitet und durchströmt diesen. Hierbei wird dem Reformatgas bzw. dem Abgas Wärme entzogen und einem Fluid, z. B. einem Kühlwasser in einer Fluidleitung 14, zugeführt. Bevor das Reformatgas den Reformatgaswärmetauscher erreicht, liegt es mit einer Gastemperatur von ca. 900-1100°C vor (Stelle B). Den Reformatgaswärmetauscher 13 verlässt das Reformatgas bzw. das Abgas mit einer Temperatur von 200-350°C (Stelle A).

Weiterhin weist der Reformer 10 einen Anschluss auf, an dem eine Restreformat-Leitung 15 angeschlossen ist. In der Restreformat-Leitung 15 wird - wie weiter unten beschrieben - Anodengas, welches ggf. noch Restabestandteile des Reformats enthält, gefördert. Die Restbestandteile an Reformat werden im Reformer 10 dem Reformatgas beigemischt oder zu Wärme umgesetzt.

Im Betrieb als reiner Heizer liefert die Reformereinrichtung 10 an der Stelle A lediglich Abgas und stellt dem Reformatgaswärmetauscher 13 eine maximale Wärmemenge zur Verfügung, welche dem Fluid in der Fluidleitung 14 aufgegeben wird. Somit arbeitet die Reformereinrichtung 10 als Heizgerät und kann insbesondere in Fahrzeugen beispielsweise als Standheizung oder als Zusatzheizung eingesetzt werden. Die Frischluftzuführleitung 12 wird durch ein Gebläse 16 mit Frischluft, z. B. Umgebungsluft, versorgt.

Die Brennstoffzelleneinrichtung 3 weist zumindest eine Brennstoffzelle, insbesondere zumindest einen Festelektrolytbrennstoffzellen-Stapel 20, auf, welcher in bekannter Art und Weise einen Anodengaseinlass 21, einen Anodengasauslass 22, einen Kathodengaseinlass 23 und einen Kathodengasauslass 24 aufweist.

Dem Anodengaseinlass 21 vorgeordnet ist ein Anodengaswärmetauscher 26, durch welchen Frischreformat über eine Frischreformatzuführleitung 27 zugeführt wird. Mit seinem zweiten Kreis ist der Anodengaswärmetauscher 26 mit dem Anodengasauslass verbunden und wird somit von heißem, 900-1100°C heißem Anodenabgas durchströmt. Das heiße Anodenabgas gibt dabei Wärme an das relativ niedrig temperierte Anodenfrischgas, d. h. das Reformatgas aus der Reformereinrichtung 2, ab und wärmt dieses vor dem Eintritt in die Brennstoffzelle 20 an. Nach dem Durchströmen des Anodengaswärmetauschers 26 besitzt das Anodenabgas eine Temperatur von etwa 200-350°C (Stelle C). Nach dem Anodengaswärmetauscher 26 wird das Anodenabgas, welches ggf. Restreformat enthalten kann, über eine Reformatrücklaufleitung 15, 28 über ein erstes Dreiwegeventil 29 und ggf. ein Gebläse 30 dem Reformer 10 zugeführt.

Das erste Dreiwegeventil 29 oder auch das Gebläse 30 alleine ermöglicht das geregelte und/oder gesteuerte Abzweigen eines Teilstroms des Restreformatgases bzw. des Anodenabgases in eine erste Zweigleitung 31, welche mit einer dem Kathodengasauslass der Brennstoffzelle 20 nachgeordneten Nachbrennkammer 32 verbunden ist.

In der Frischreformatzuführleitung 27 ist dem Anodengaswärmetauscher 26 vorgeordnet ein zweites Dreiwegeventil 33 angeordnet, welches über eine zweite Zweigleitung 34 mit der Nachbrennkammer 32 verbunden ist. Über das zweite Dreiwegeventil 33 kann geregelt und/oder gesteuert ein Teilstrom des Frischreformatgases über die zweite Zweigleitung 34 der Nachbrennkammer 32 zugeführt werden. Weiterhin führt ggfs. vom Gebläse 16 eine Frischluftzuführleitung 35 zur Nachbrennkammer 32.

In der Nachbrennkammer 32 wird kathodenseitiges Abgas, welches den Kathodengasauslass 24 der Brennstoffzelle 20 verlässt, ggf. unter geregelter und/oder gesteuerter Zugabe von Restreformat über die Zweigleitung 31 und/oder die geregelte und/oder gesteuerte Zugabe von Frischreformat über die Zweigleitung 34 vollständig verbrannt, sodass nach der Nachbrennkammer 32 brennstofffreies heißes Abgas vorliegt (Stelle D).

Der Nachbrennkammer 32 ist abgasseitig ein Kathodengaswärmetauscher nachgeordnet, welcher einerseits von dem heißen, brennstofffreien Abgas aus der Nachbrennkammer 32 durchströmt wird, wobei das heiße, brennstofffreie Abgas Wärme abgibt. Andererseits ist der Kathodengaswärmetauscher 36 mit dem Gebläse 16 über eine Frischluftzuführleitung 37 und mit dem Kathodengaseinlass 23 der Brennstoffzelle 20 verbunden, sodass der Kathodengaswärmetauscher 36 von Frischluft durchströmbar ist, welche im Kathodengaswärmetauscher 36 Wärme vom heißen, brennstofffreien Abgas aufnimmt und somit vorerhitzt in die Brennstoffzelle 20 gelangt. Das Abgas, welches den Kathodengaswärmetauscher 36 verlässt, hat eine Temperatur von ca. 200-300°C, was ein sehr geringes Temperaturniveau darstellt.

Gemäß einer Ausführungsform der Erfindung sind der Reformer 10 und der Reformatgaswärmetauscher 13 zur Reformereinrichtung 2 und der Brennstoffzellenstapel 20, der Anodengaswärmetauscher 26, die Nachbrennkammer 32 und der Kathodengaswärmetauscher 36 zur Brennstoffzelleneinrichtung 3 modulartig zusammengefasst.

Weiterhin kann vorteilhafterweise das erste Dreiwegeventil 29, das zweite Dreiwegeventil 33 und ggf. das Gebläse 30 zur Verteilungseinrichtung 4 modulartig zusammengefasst sein, wobei die so entstehenden Module in einfacher Art und Weise lediglich durch Niedertemperaturleitungen verbunden werden müssen, da aus keinem der Modulauslässe Heißgas, d.h. Gas mit einer Temperatur von beispielsweise über 400°C, gelangt. Somit können die Reformereinrichtung 2, die Brennstoffzelleneinrichtung 3 und die Verteilungseinrichtung 4 mit großer Variabilität beispielsweise in einem Kraftfahrzeug positioniert werden und mittels kostengünstiger und mit geringem Konstruktions- und Fertigungsaufwand herstellbarer Leitungen zur Ausbildung der Energieumwandlungsvorrichtung 1 verbunden werden.

Eine erfindungsgemäße Energieumwandlungsvorrichtung 1 hat zudem den Vorteil, dass aufgrund eines variablen Reformerbetriebs zwischen den Betriebspunkten Reformer und Heizer der Einbau eines Zusatzheizers oder einer Standheizung vollständig entfallen kann und trotzdem die Komfortmerkmale einer Zuheizung und Standheizung sowie die Möglichkeit einer Motorvorwärmung im Kaltstartbetrieb gegeben sind.

Die elektrische Energie wird von der Brennstoffzelle 20 an Anschlussklemmen 40a, 41 a zur Verfügung gestellt.

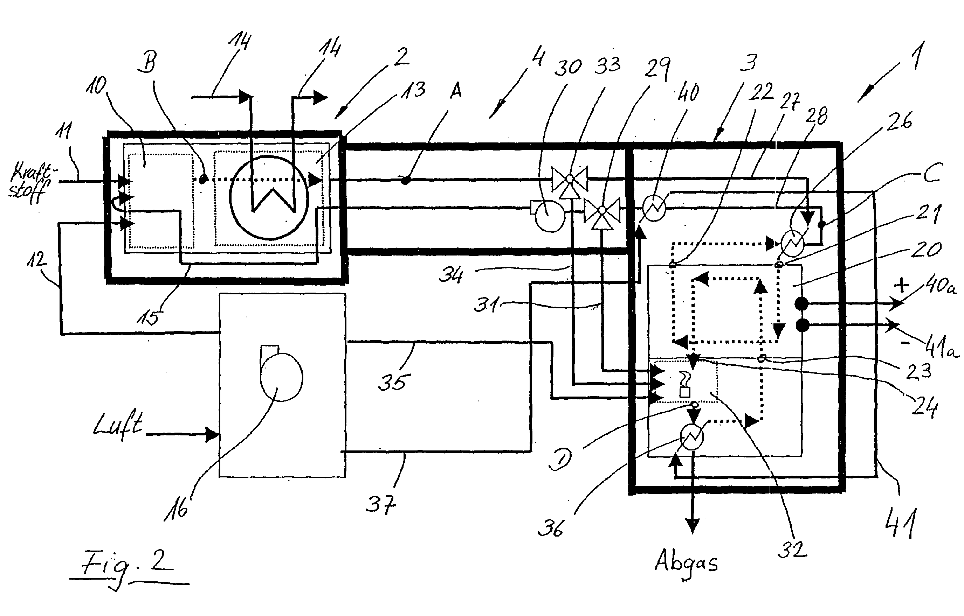

Gemäß einer weiteren Ausführungsform der Erfindung (Fig. 2) ist zwischen dem Anodengaswärmetauscher 26 und dem ersten Dreiwegeventil 29 ein weiterer Wärmetauscher, z.B. ein Zusatzwärmetauscher 40, angeordnet, welcher einerseits von hinsichtlich seiner Temperatur reduziertem Anodenabgas, welches den Anodengaswärmetauscher 26 verlassen hat, durchströmt wird. Andererseits ist der Zusatzwärmetauscher 40 mit der Frischluftzuführleitung 37 verbunden, sodass Wärme des Anodensbgases an die zugeführte Frischluft abgegeben wird, welche somit über eine Brückenleitung 41, welche den Zusatzwärmetauscher 40 mit dem Eingang des Kathodenwärmetauschers 36 verbindet, gelangt. Somit kann eine weitere Temperaturreduzierung des Restreformatgases in der Restreformatgasleitung 15,28 erreicht werden und zudem eine Vorwärmung der Kathodenfrischluft erzielt werden, bevor sie dem Kathodenwärmetauscher 36 zugeführt wird.

Bei der solchen Energieumwandlungsvorrichtung ist es von Vorteil, dass durch die erfindungsgemäße Reformereinrichtung 10 eine Mehrfachverwendung von Bauteilen durch den modularen Aufbau verwirklicht werden kann, sodass die Komponenten für verschiedene Applikationen nur unwesentlich modifiziert werden müssen. Somit kann eine hohe Integrationsfähigkeit dieser Komponenten in verschiedenste Fahrzeuge erreicht werden, da in einfacher Art und Weise die Möglichkeit besteht, die Schnittstellen bzw. die Kopplungsstellen zu standardisieren. Somit können die Einzelteile der Energieumwandlungsvorrichtung in erheblich höheren Stückzahlen gefertigt werden, was zu einer Kostenreduzierung führt.

Weiterhin erlaubt die erfindungsgemäße Energieumwandlungsvorrichtung den vollständigen Entfall von Zuheizern und Standheizungen ohne Einbußen im Komfort bzw. bei den Kaltstarteigenschaften des Antriebsmotors.

Die erfindungsgemäße Energieumwandlungsvorrichtung stellt eine hocheffiziente Stromversorgung mit gekoppelter Wärmenutzung bei extrem hohem Wirkungsgrad, welcher durch Rezirkulierungsmaßnahmen von Anodenabgas noch gesteigert ist, zur Verfügung. Besonders vorteilhaft ist, dass im gesamten System der Energieumwandlungsvorrichtung die Heißgas führenden Bauteile bzw. Leitungen in Modulen integrierbar sind, sodass Verbindungen zwischen den Modulen ohne Einsatz von Hochtemperaturkomponenten in einfacher Art und Weise ausgebildet werden können.

Weiterhin kann durch den modulartigen Aufbau der Reformereinrichtung, der Brennstoffzelleneinrichtung und der Verteilungseinrichtung die erfindungsgemäße Energieumwandlungsvorrichtung mit großer Flexibilität an unterschiedliche Bauraumbedingungen in unterschiedlichen Fahrzeugen angepasst werden.

Ein weiterer Vorteil der Erfindung ist, dass bis zum Erreichen eines optimalen Betriebspunktes des Reformers 10 Reformatgas von ggf. geringerer Qualität nicht zwangsläufig durch die Brennstoffzelle 20 geleitet werden muss, sondern über das zweite Dreiwegeventil 33 direkt in die Nachbrennkammer 32 geleitet werden kann, sodass eine Beschädigung bzw. Verunreinigung der Brennstoffzelle 20 vermieden ist.

Ein weiterer Vorteil ist, dass die Reformereinrichtung und die Brennstoffzelleneinrichtung auch unabhängig voneinander betrieben werden können. Insbesondere kann die Brennstoffzelleneinrichtung auch ohne Reformereinrichtung betrieben werden wenn eine andere Quelle für Reformat aus anderen Gründen im Fahrzeug vorhanden ist.

## Patentansprüche

1. Kraftfahrzeug mit einer Energieumwandlungsvorrichtung mit einer Reformereinrichtung (2) und einer Festoxid-Brennstoffzelleneinrichtung (3), welche der Reformereinrichtung (2) nachgeordnet ist, wobei die Reformereinrichtung (2) zumindest über eine Brennstoffzufuhrleitung (11) und eine Luftzufuhrleitung (12) verfügt und die Reformereinrichtung einen Reformer (10) mit Mitteln zum Einstellen des Kraftstoffs-Luft-Verhältnisses im Reformer (10) aufweist, und wobei zwischen dem Reformer (10) und der Brennstoffzelleneinrichtung (3) ein Reformatgaswärmetauscher (13) angeordnet ist, welcher Wärme vom heißen Reformatgas hin zu einem in einer Fluidleitung (14) geführten Fluid überträgt, welches in einer Standheizung oder einer Zusatzheizung des Kraftfahrzeugs oder zur Vorwärmung des Antriebs-Motor des Kraftfahrzeugs verwendbar ist,
**dadurch gekennzeichnet, dass** die Synthesegasproduktion und die Wärmeproduktion der Reformereinrichtung (2) innerhalb der Grenzwerte "vollständige Verbrennung = maximale Wärmeproduktion " und "vollständige Reformierung = maximale Synthesegasproduktion" frei wählbar ist.

2. Kraftfahrzeug mit einer Energieumwandlungsvorrichtung nach Anspruch 1, **dadurch gekennzeichnet, dass** der Reformer (10) mit einer Restreformatleitung (15), d.h. mit einer Anodenabgasleitung in Verbindung steht.

3. Kraftfahrzeug mit einer Energieumwandlungsvorrichtung nach Anspruch 1 und/oder 2, **dadurch gekennzeichnet, dass** die Brennstoffzelleneinrichtung (3) einen Anodengaswärmetauscher (26) aufweist, welcher Wärme vom heißen Anodenabgas zum Anodenfrischgas (= Reformatgas) überträgt.

4. Kraftfahrzeug mit einer Energieumwandlungsvorrichtung nach einem der vorangegangenen Ansprüche, **dadurch gekennzeichnet, dass** die Brennstoffzelleneinrichtung (3) zumindest eine Brennstoffzelle (20) aufweist welcher anoden- und/oder kathodenabgasseitig eine Nachbrennkammer (32) zugeordnet ist.

5. Kraftfahrzeug mit einer Energieumwandlungsvorrichtung nach einem der vorangegangenen Ansprüche, **dadurch gekennzeichnet, dass** der Nachbrennkammer (32) ein Kathodengaswärmetauscher (36) nachgeordnet ist, welcher Wärme vom Abgas der Nachbrennkammer (32) zum Kathodenfrischgas überträgt.

6. Kraftfahrzeug mit einer Energieumwandlungsvorrichtung nach einem der vorangegangenen Ansprüche, **dadurch gekennzeichnet, dass** zumindest die Brennstoffzelle (20), der Anodengaswärmetauscher (26), die Nachbrennkammer (32) und ggfs. der Kathodengaswärmetauscher (36) zu einer Brennstoffzelleneinrichtung (3) modulartig zusammengefasst sind.

7. Kraftfahrzeug mit einer Energieumwandlungsvorrichtung nach einem der vorangegangenen Ansprüche, **dadurch gekennzeichnet, dass** der Reformer (10) und der Reformatgaswärmetauscher (13) zu einer Reformereinrichtung (2) modulartig zusammengefasst sind.

8. Kraftfahrzeug mit einer Energieumwandlungsvorrichtung nach einem der Ansprüche 3 - 7, **dadurch gekennzeichnet, dass** zwischen dem Anodengaswärmetauscher (26) und einem Dreiwegeventil (29) in einer Restreformatrücklaufleitung (15,28) das mit einer ersten Zweigleitung (31) verbunden ist, die mit der Nachbrennkammer (32) verbunden ist, ein Zusatzwärmetauscher (40) angeordnet ist, welcher Wärme vom Anodenabgas an das Kathodenfrischgas überträgt.

9. Kraftfahrzeug mit einer Energieumwandlungsvorrichtung nach einem der vorangegangenen Ansprüche, **dadurch gekennzeichnet, dass** eine zentrale Luftversorgungseinheit (16) vorhanden ist, welche Frischluft für den Reformer (10), die Nachbrennkammer (32) und die Brennstoffzelle (20) liefert.

## Claims

1. A motor vehicle comprising an energy conversion device with a reformer mechanism (2) and a solid oxide fuel cell mechanism (3), which is arranged downstream from the reformer mechanism (2), the reformer mechanism (2) having at least a fuel supply line (11) and an air supply line (12) and the reformer mechanism having a reformer (10) with means for adjusting the fuel/air ratio in the reformer (10), and wherein a reformate gas heat exchanger (13) is arranged between the reformer (10) and the fuel cell mechanism (3) and transfers heat from the hot reformate gas to a fluid guided in a fluid line (14), which fluid can be used in an auxiliary heating system or an additional heating system of the motor vehicle or for pre-heating the drive engine of the motor vehicle, **characterised in that** the synthesis gas production and the heat production of the reformer mechanism (2) is freely selectable within the limit values "complete combustion = maximum heat production" and "complete reformation = maximum synthesis gas production".

2. A motor vehicle comprising an energy conversion device according to claim 1, **characterised in that** the reformer (10) is connected to a residual reformate line (15), that is, to an anode exhaust gas line.

3. A motor vehicle comprising an energy conversion device according to claim 1 and/or 2, **characterised in that** the fuel cell mechanism (3) has an anode gas heat exchanger (26), which transfers heat from the hot anode exhaust gas to the fresh anode gas (= reformate gas).

4. A motor vehicle comprising an energy conversion device according to any one of the preceding claims, **characterised in that** the fuel cell mechanism (3) has at least one fuel cell (20), with which an afterburning chamber (32) is associated on the anode exhaust gas side and/or the cathode exhaust gas side.

5. A motor vehicle comprising an energy conversion device according to any one of the preceding claims, **characterised in that** a cathode gas heat exchanger (36) is connected downstream from the afterburning chamber (32) and transfers heat from the exhaust gas of the afterburning chamber (32) to the fresh cathode gas.

6. A motor vehicle comprising an energy conversion device according to any one of the preceding claims, **characterised in that** at least the fuel cell (20), the anode gas heat exchanger (26), the afterburning chamber (32) and optionally the cathode gas heat exchanger (36) are combined in a modular manner to form a fuel cell mechanism (3).

7. A motor vehicle comprising an energy conversion device according to any one of the preceding claims, **characterised in that** the reformer (10) and the reformate gas heat exchanger (13) are combined in a modular manner to form a reformer mechanism (2).

8. A motor vehicle comprising an energy conversion device according to any one of claims 3-7, **characterised in that** arranged between the anode gas heat exchanger (26) and a three-way valve (29) in a residual reformate return line (15, 28), which valve is connected by a first branch line (31), which is connected to the afterburning chamber (32) is an additional heat exchanger (40), which transfers heat from the anode exhaust gas to the fresh cathode gas.

9. A motor vehicle comprising an energy conversion device according to any one of the preceding claims, **characterised in that** a central air supply unit (16) is present, which supplies fresh air for the reformer (10), the afterburning chamber (32) and the fuel cell (20).

## Revendications

1. Véhicule automobile doté d'un dispositif de conversion d'énergie comprenant un dispositif de reformage (2) et un dispositif de pile à combustible à oxyde solide (3) disposé en aval du dispositif de reformage (2), le dispositif de reformage (2) disposant au moins d'une conduite d'amenée de carburant (11) et d'une conduite d'amenée d'air (12) et le dispositif de reformage présentant un reformeur (10) avec des moyens de réglage du rapport air-carburant dans le reformeur (10), et un échangeur de chaleur de gaz de reformat (13) entre le reformeur (10) et le dispositif de pile à combustible (3), qui transmet la chaleur du gaz de reformat chaud à un fluide acheminé dans une conduite de fluide (14), et utilisable dans un chauffage auxiliaire du véhicule automobile ou pour préchauffer le moteur d'entraînement du véhicule automobile,
**caractérisé en ce que**
la production de gaz de synthèse et la production de chaleur du dispositif de reformage (2) peuvent être choisies librement à l'intérieur des valeurs limite « combustion complète = production de chaleur maximale » et « reformage complet = production de gaz de synthèse maximale ».

2. Véhicule automobile doté d'un dispositif de conversion d'énergie selon la revendication 1,
**caractérisé en ce que**
le reformeur (10) est relié à une conduite de reformat résiduel (15), c'est-à-dire à une conduite de gaz d'échappement d'anode.

3. Véhicule automobile doté d'un dispositif de conversion d'énergie selon la revendication 1 et/ ou 2,
**caractérisé en ce que**
le dispositif de pile à combustible (3) présente un échangeur de chaleur de gaz d'anode (26) qui transmet de la chaleur du gaz d'échappement d'anode au gaz frais d'anode (= gaz de reformat).

4. Véhicule automobile doté d'un dispositif de conversion d'énergie selon l'une des revendications précédentes,
**caractérisé en ce que**
le dispositif de pile à combustible (3) présente au moins une pile à combustible (20) à laquelle est associée, du côté gaz d'échappement de l'anode et/ou du côté de gaz d'échappement de la cathode, une chambre de combustion secondaire (32).

5. Véhicule automobile doté d'un dispositif de conversion d'énergie selon l'une des revendications précédentes,
**caractérisé en ce qu'**
en aval de la chambre de combustion secondaire (32), un échangeur de chaleur de gaz de cathode (36) transmet la chaleur provenant des gaz d'échappement de la chambre de combustion secondaire (32) jusqu'au gaz frais de cathode.

6. Véhicule automobile doté d'un dispositif de conversion d'énergie selon l'une des revendications précédentes,
**caractérisé en ce qu'**
au moins la pile à combustible (20), l'échangeur de chaleur de gaz d'anode (26), la chambre de combustion secondaire (32) et le cas échéant l'échangeur de chaleur de gaz de cathode (36) sont regroupés de façon modulaire pour former un dispositif de pile à combustible (3).

7. Véhicule automobile doté d'un dispositif de conversion d'énergie selon l'une des revendications précédentes,
**caractérisé en ce que**
le reformeur (10) et l'échangeur de chaleur de gaz de reformat (13) sont regroupés de façon modulaire pour former un dispositif de reformage (2).

8. Véhicule automobile doté d'un dispositif de conversion d'énergie selon l'une des revendications 3 à 7,
**caractérisé en ce qu'**
entre l'échangeur de chaleur de gaz d'anode (26) et une vanne trois voies (29) située dans une conduite de retour de reformat résiduel (15, 28), reliée à une première conduite d'embranchement (31) reliée à la chambre de combustion secondaire (32), un échangeur de chaleur supplémentaire (40) transmet la chaleur du gaz d'échappement d'anode au gaz frais de cathode.

9. Véhicule automobile doté d'un dispositif de conversion d'énergie selon l'une des revendications précédentes,
**caractérisé en ce qu'**
une unité d'alimentation en air centrale (16) fournit de l'air frais pour le reformeur (10), la chambre de combustion secondaire (32) et la pile à combustible (20).
